# FASCICULE DE BREVET EUROPEEN

(11) **EP 3 583 825 B1**
(45) Date de publication et mention de la délivrance du brevet: **04.08.2021**
(21) Numéro de dépôt: 18707100.6
(22) Date de dépôt: 09.02.2018
(51) Int. Cl.: H05B 3/06, B60H 1/22, F24H 3/04

(54) **INTERFACE DE CONNEXION ÉLECTRIQUE D'UN DISPOSITIF DE CHAUFFAGE ÉLECTRIQUE POUR VÉHICULE AUTOMOBILE**
ELEKTRISCHE VERBINDUNGSSCHNITTSTELLE EINER ELEKTRISCHEN HEIZVORRICHTUNG FÜR EIN KRAFTFAHRZEUG
ELECTRICAL CONNECTION INTERFACE OF AN ELECTRIC HEATING DEVICE FOR A MOTOR VEHICLE

(30) Priorité: 14.02.2017 FR 1751171
(43) Date de publication de la demande: 25.12.2019
(73) Titulaire: Valeo Systemes Thermiques, 78322 Le Mesnil Saint-Denis Cedex (FR)
(72) Inventeur: TELLIER, Laurent, 78322 Le Mesnil Saint-Denis Cedex (FR); PIERRON, Frédéric, 78322 Le Mesnil Saint-Denis Cedex (FR); KARAASLAN, Serif, 78322 Le Mesnil Saint-Denis Cedex (FR); COUAPEL, Yann, 78322 Le Mesnil Saint-Denis Cedex (FR)
(74) Mandataire: Tran, Chi-Hai
(86) Numéro de dépôt international: PCT/FR2018/050315
(87) Numéro de publication internationale: WO 2018/150125

(56) Documents cités:
- EP-A1- 1 462 733
- EP-A1- 1 580 495
- WO-A1-2006/123915
- WO-A1-2007/129608
- DE-A1-102006 032 772
- KR-U- 20100 000 610

## Description

L'invention concerne les dispositifs de chauffage électrique, notamment pour une installation de chauffage, de ventilation et/ou de climatisation d'un véhicule automobile. Les documents DE 10 2006 032772 A1, WO 2006/123915 A1, EP 1 580 495 A1, EP 1 462 733 A1, WO 2007/129608 A1 et KR 2010 0000610 U divulguent des installations de chauffage d'un véhicule selon l'art antérieur.

Le réchauffage de l'air destiné au chauffage de l'habitacle d'un véhicule automobile à moteur thermique, ainsi qu'au désembuage et au dégivrage des surfaces vitrées, est assuré par échange de chaleur entre un flux d'air et un liquide de refroidissement du moteur thermique circulant dans un échangeur de chaleur.

Au démarrage du moteur thermique et pendant une certaine durée suivant le temps de démarrage, les calories transportées par le liquide de refroidissement du moteur sont insuffisantes pour assurer un chauffage rapide et efficace de l'habitacle. Cela est observé plus particulièrement avec certains types de moteur et présente un inconvénient par temps froid, car non seulement la température interne de l'habitacle ne peut être élevée rapidement, mais en outre les fonctions de désembuage et de dégivrage ne peuvent être assurées efficacement.

Pour remédier à ces inconvénients, il a été proposé de monter un dispositif de chauffage électrique additionnel dans le flux d'air dirigé vers l'habitacle.

Un tel dispositif de chauffage électrique additionnel comprend généralement un cadre présentant un corps de chauffe comprenant une pluralité de plaques conductrices parallèles entre lesquelles sont montés des éléments résistifs chauffants, par exemple des résistances à coefficient de température positif (CTP), et des éléments radiants augmentant la surface d'échange thermique avec le flux d'air traversant le dispositif de chauffage électrique. Ces différents éléments sont assemblés de manière à former au moins un élément chauffant, le ou les éléments chauffants constitutifs du corps de chauffe étant alors insérés dans un logement de celui-ci.

Les éléments chauffant sont munis à une extrémité d'un terminal de raccordement qui permet la connexion électrique à un réseau d'alimentation électrique propre au véhicule. Une interface de connexion est montée à une extrémité du cadre pour fermer le logement dans lesquels sont disposés les éléments chauffants et cette interface de connexion comporte des encoches que les terminaux de raccordement traversent pour être en prise de l'autre côté de l'interface de connexion.

La zone de contact entre le terminal de raccordement et les parois délimitant l'encoche, à une extrémité de l'élément chauffant, permet la tenue de l'élément chauffant mais génère un risque de cisaillement du terminal de raccordement lorsque l'élément chauffant est soumis à des vibrations et se déplace à l'intérieur du logement. Ce risque de cisaillement peut être d'autant plus grand que l'épaisseur des électrodes est diminuée, dans un contexte de miniaturisation des équipements des véhicules automobiles et de réduction des coûts.

L'invention vise à proposer un dispositif de chauffage électrique additionnel, et notamment une interface de connexion équipant un tel dispositif, qui permette de supprimer ou tout au moins limiter le risque de cisaillement des éléments chauffants.

L'invention propose à cet effet une interface de connexion électrique selon la revendication 1.

Selon différentes caractéristiques de l'invention, prises seules ou en combinaison, on pourra prévoir que :
- les nervures d'une paire de nervures sont orientées perpendiculairement à l'orientation de l'encoche correspondante ;
- l'interface de connexion électrique comporte une pluralité d'encoches, et une pluralité de nervures associées par paire à chacune des encoches ;
- l'ensemble des nervures s'étend perpendiculairement aux encoches ;
- les nervures sont alignées les unes à la suite des autres ; par l'alignement des nervures, on comprend que l'agencement successif des nervures forme une ligne droite régulière, seulement coupée par les espacements entre les nervures au-dessus des encoches ;
- les nervures sont centrées sur l'encoche correspondante ; par le centrage des nervures, on comprend que les nervures s'étendent à mi-hauteur de l'encoche correspondante par rapport à la direction le long de laquelle s'étendent les encoches ;
- l'épaisseur des nervures, c'est-à-dire la dimension des nervures dans la direction d'allongement des encoches, est inférieure à la dimension des encoches dans cette même direction ; l'épaisseur des nervures est de l'ordre de 10 à 50% de la dimension correspondante des encoches ;
- au moins deux nervures successives sont identiques ;
- une nervure disposée en bout de la série formée par la pluralité de nervures présente une dimension plus petite que la dimension correspondante des autres nervures ;
- au moins une nervure s'étend d'une encoche à l'encoche voisine ;
- le dispositif de limitation du cisaillement formé par une paire de nervures est tel qu'une première nervure présente un bord latéral droit et qu'une deuxième nervure présente un bord latéral au profil accidenté ;
- le bord latéral au profil accidenté présente une portion proximale qui s'étend depuis la platine perpendiculairement à cette platine et au voisinage direct de l'encoche et une portion distale formant un décrochement par rapport à la portion proximale, en retrait par rapport à l'encoche ;
- la portion proximale et la portion distale sont séparées par une portion intermédiaire inclinée formant rampe de guidage du terminal de raccordement vers l'encoche correspondante ;
- la nervure disposée en bout de la série est formée uniquement par une portion proximale au voisinage direct de l'encoche ;
- l'interface de connexion électrique comporte au moins un doigt d'encliquetage configuré pour coopérer avec un alésage formé dans un cadre du dispositif de chauffage électrique et au moins une nervure est solidaire de ce doigt d'encliquetage ; lors de la fixation par encliquetage du cadre avec l'interface de connexion, le doigt est figé en position par son raccordement à la nervure, et l'élasticité nécessaire à la fixation par encliquetage est obtenue principalement par déformation du cadre portant l'alésage ; de la sorte, les moyens de fixation par encliquetage sont plus résistants au choc et on fiabilise la fixation du raccordement électrique ;
- la platine comporte en outre un picot, disposé en bordure du dispositif de limitation du cisaillement ; ce picot est positionné et dimensionné pour coopérer avec une empreinte réalisée dans l'une des parois délimitant le cadre et contre laquelle vient en appui la platine de l'interface de connexion électrique ; le picot peut former de la sorte un moyen de détrompage du montage de l'interface de connexion ;
- l'interface de connexion électrique comprend au moins un pion de positionnement ; selon une variante, on peut prévoir deux pions de positionnement agencés de part et d'autre de la série d'encoches et de nervures associées formant dispositif de limitation de cisaillement ;

L'invention concerne également un dispositif de chauffage électrique additionnel comportant une interface de connexion tel que décrit précédemment et un cadre dans lequel est logé l'au moins un élément chauffant, l'interface de connexion étant configurée pour être montée à une extrémité du cadre pour le raccordement du dispositif à un réseau électrique du véhicule et l'alimentation des éléments chauffants.

On peut prévoir dans ce dispositif de chauffage électrique additionnel que le cadre comporte des parois parmi lesquelles au moins une paroi proximale sur laquelle est fixée l'interface de connexion. Et on peut prévoir qu'au moins une nervure s'étende depuis la platine de l'interface de connexion en présentant une dimension perpendiculairement à la platine qui est inférieure à la dimension de la paroi proximale du cadre selon la même direction. De la sorte, l'extrémité libre de la nervure ne dépasse pas de la paroi proximale du cadre et elle ne se retrouve pas dans le flux d'air destiné à traverser les éléments chauffants.

Par ailleurs, au moins une nervure peut s'étendre depuis la platine de l'interface de connexion de manière à être au contact d'une ailette d'échange thermique d'un élément chauffant.

Selon l'invention, le dispositif de chauffage additionnel comporte une pièce formant dispositif de limitation du débattement des éléments chauffants et comportant une ou plusieurs ouvertures configurées pour recevoir chacune un pion solidaire du cadre, ce pion étant déformé plastiquement à l'intérieur de l'ouverture, de manière à plaquer le dispositif de limitation du débattement contre les éléments chauffants et de manière à exercer une force d'appui pour les plaquer dans leur logement dans le cadre.

Selon une caractéristique de l'invention, le dispositif de limitation du débattement est agencé de sorte que la force d'appui qu'il exerce sur les éléments chauffants lorsque le ou les pions sont déformés plastiquement est perpendiculaire à la direction d'insertion des éléments chauffants dans les encoches ménagées dans l'interface de connexion pour le raccordement électrique.

D'autres caractéristiques et avantages de la présente invention apparaitront plus clairement à l'aide de la description et des dessins parmi lesquels :
- la figure 1 est une vue d'ensemble, en perspective, d'un dispositif de chauffage électrique selon un aspect de l'invention, comportant notamment cinq éléments radiants formant deux éléments chauffants agencés dans un cadre qui porte à une extrémité une interface de connexion électrique des éléments chauffants ;
- la figure 2 est une vue, dans une autre perspective, du dispositif de la figure 1, dans laquelle on a rendu visible la face de l'interface de connexion opposée au cadre, et l'extrémité de raccordement électrique de quatre des cinq éléments radiants, un des éléments radiants ayant été retiré pour rendre visible l'encoche par laquelle l'extrémité de raccordement électrique des éléments chauffants traverse l'interface de connexion électrique ;
- la figure 3 est une vue, dans une perspective similaire à celle de la figure 1, de l'interface de connexion seule ;
- la figure 4 est une vue, dans une autre perspective, de l'interface de connexion de la figure 3, rendant plus particulièrement visible les cinq encoches prévues pour le raccordement électrique de chacun des cinq éléments radiants ;
- la figure 5 est une vue en perspective d'un détail de l'interface de connexion de la figure 3, dans laquelle on a rendu visible un terminal de raccordement monté en bout d'une électrode d'un élément chauffant tel qu'il est enfiché dans une des encoches que présente l'interface de connexion ;
- la figure 6 est une vue de face de l'interface de connexion de la figure 3;
- la figure 7 est une vue de face, similaire à celle de la figure 6, dans laquelle on a illustré les éléments chauffants tels qu'ils sont raccordés par l'intermédiaire de l'interface de connexion électrique ;
- la figure 8 est une vue en perspective d'un détail de l'interface de connexion de la figure 3, dans laquelle on a rendu visible chacun des éléments chauffants et leur terminal de raccordement associé ; et
- la figure 9 est une coupe, illustrée en perspective, représentant des moyens de mise en place du cadre du dispositif de chauffage électrique sur la platine de l'interface de connexion ;
- la figure 10 est une vue d'un dispositif de limitation du débattement des éléments chauffants configuré pour être disposé sur le cadre du dispositif de chauffage électrique et y être figé en position par une déformation plastique de pions solidaires du cadre, visibles sur la figure 1 dans leur état d'origine avant déformation ; et
- la figure 11 est une vue du dispositif de chauffage électrique additionnel de la figure 1 après déformation plastique des pions solidaires pour figer la position du dispositif de limitation du débattement contre les éléments chauffants.

Il faut tout d'abord noter que les figures exposent l'invention de manière détaillée pour mettre en œuvre l'invention, lesdites figures pouvant bien entendu servir à mieux définir l'invention le cas échéant. Toutefois, il est à noter que ces figures n'exposent qu'une partie des variantes de réalisation possibles selon l'invention.

Dans la description qui va suivre, on se réfèrera à une orientation en fonction des axes longitudinaux L, verticaux V et transversaux T, tels qu'ils sont définis arbitrairement par le trièdre L,V,T représenté sur les figures. Le choix des appellations de ces axes n'est pas limitatif de l'orientation que peut prendre le dispositif dans son application à un véhicule automobile.

Un dispositif de chauffage électrique additionnel selon l'invention, tel qu'il est illustré sur les figures, est apte à être logé en travers d'un conduit de circulation d'air d'une installation de ventilation, chauffage et/ou climatisation, de manière à transformer l'énergie électrique, notamment celle prélevée sur le véhicule, en énergie thermique restituée dans l'air traversant ladite installation de ventilation, chauffage et/ou climatisation. L'installation n'est pas ici représentée, mais on comprendra qu'un conduit principal de cette installation comporte de façon classique une ouverture réalisée dans la paroi pour l'insertion du dispositif de chauffage additionnel.

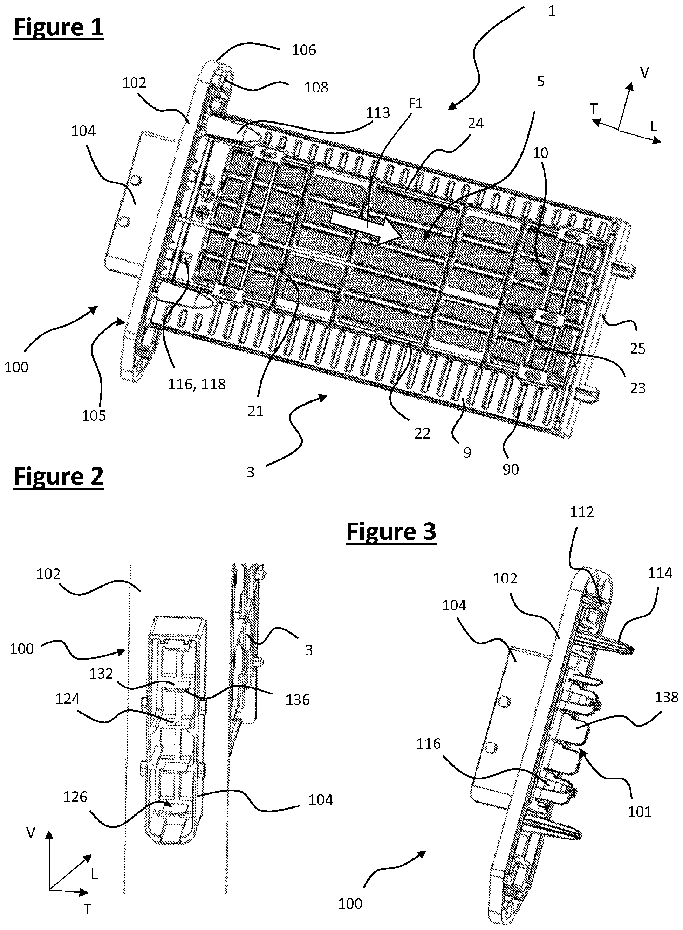

La figure 1 montre un dispositif de chauffage électrique additionnel 1 selon l'invention, comprenant un cadre 3 dans lequel des éléments chauffants 5, aptes à transformer un courant électrique en énergie thermique, sont logés. Pour assurer que les éléments chauffants 5 ne débattent pas à l'intérieur du cadre 3, le dispositif de chauffage électrique 1 est, ici, équipé de deux dispositifs de limitation 10 du débattement des éléments chauffants 5 qui seront décrits en détails plus loin.

Le dispositif de chauffage électrique additionnel comporte en outre une interface de connexion 100 disposée à une extrémité proximale du boîtier pour le raccordement du dispositif à un réseau électrique du véhicule et l'alimentation électrique des éléments chauffants 5, et selon l'invention, cette interface de connexion comporte un dispositif de limitation du cisaillement 101 des éléments chauffants dans la zone de raccordement.

L'interface de connexion 100 participe à fermer, lorsque celle-ci est rapportée sur le cadre et tel que cela est visible sur la figure 1, les logements ménagés dans le cadre pour recevoir les éléments chauffants, de manière à les maintenir en position. L'interface de connexion 100 s'étend dans un plan défini par l'axe transversal T et l'axe vertical V.

On comprend que les éléments chauffants sont insérés dans le cadre selon l'axe longitudinal L par une ouverture formant accès ménagé à une extrémité longitudinale du cadre 3 que l'on vient ensuite fermer par la mise en place de l'interface de connexion 100.

Les éléments chauffants 5 comprennent des moyens aptes à échanger de la chaleur, tels que des éléments radiants 53 permettant d'augmenter la surface d'échange thermique, avec le flux d'air F1 traversant le dispositif de chauffage électrique 1. Les éléments chauffants 5 comprennent également des électrodes 54 entre lesquelles sont disposées des éléments résistifs chauffants, par exemple des résistances à coefficient de température positif 55 (CTP), et contre lesquelles sont fixés les éléments radiants. Les électrodes 54 et les résistances CTP 55 permettent de transformer un courant électrique en énergie thermique. Il est à noter que les résistances à coefficient de température positif 55 peuvent être collés directement sur les éléments radiants 53.

Le cadre 3 comporte un compartiment de chauffe 30, formant un carter de réception pour les éléments chauffants 5, et il est configuré pour coopérer à une de ses extrémités avec une interface de connexion 100. Les éléments chauffants 5 sont insérés dans des logements ménagés à l'intérieur du compartiment de chauffe 30. Et l'interface de connexion 100 vient fermer un accès par lequel sont insérés les éléments chauffants dans les logements du compartiment de chauffe en même temps qu'elle permet le raccordement du dispositif de chauffage électrique 1 à un réseau électrique du véhicule permettant l'alimentation électrique des éléments chauffants 5.

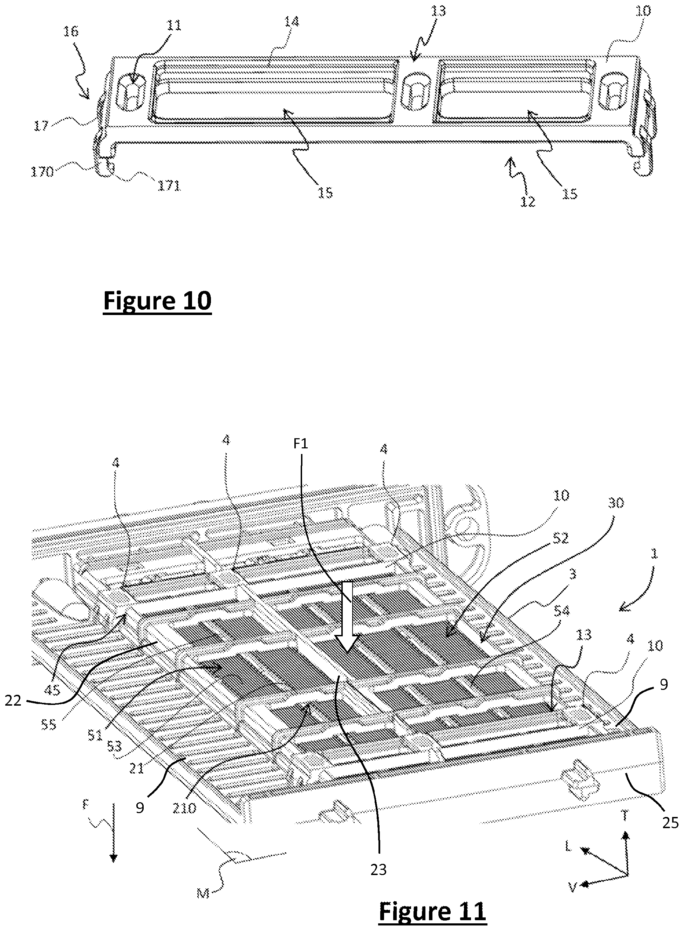

Le cadre 3 et le compartiment de chauffe 30 présentent une forme de parallélépipède rectangle. Les deux faces principales du cadre 3, respectivement avant (visible sur les figures 1 et 11) et arrière (non visible sur les figures), sont ajourées pour permettre le passage d'un flux d'air F1 et une diffusion de chaleur dans le conduit où le dispositif de chauffage électrique 1 est installé. Le cadre 3 comprend un plan médian M correspondant à un plan passant par une moitié du cadre et étant perpendiculaire à une direction suivie par le flux d'air F1 circulant au travers du dispositif de chauffage électrique 10. Il est entendu que les faces avant et arrière s'étendent dans des plans parallèles au plan médian M.

On note également que le cadre 3 comprend une barrette 9 s'étendant à partir du compartiment de chauffe 30 dans le plan médian M du cadre, de manière à former une extrémité libre du cadre 3. Cette barrette 9 rigidifie le cadre 3 et elle comprend des fentes d'aération 90 autorisant le flux d'air à circuler à travers. Les fentes d'aération 90 s'étendent selon l'axe vertical V du dispositif de chauffage 1. Plus particulièrement, le cadre 3 comprend deux barrettes 9 disposées de part et d'autre du compartiment de chauffe 30. Les deux barrettes 9 présentent des hauteurs différentes, mesurée selon l'axe vertical V.

Comme le montre la figure 1 notamment, les logements du cadre 3 sont définis par des parois aussi bien verticales 21 que longitudinales 22, 23, 24.

Plus précisément, des parois verticales 21, disposées à intervalles réguliers ou non les unes des autres, s'étendent selon l'axe vertical V au niveau du compartiment de chauffe 30 afin de le rigidifier sans pénaliser le dégagement de chaleur. Des parois verticales 21 sont ménagées à la fois sur la face avant et sur la face arrière du cadre 3, de sorte que ces parois verticales 21 délimitent une épaisseur, mesurée selon l'axe transversal T, des logements.

Des parois longitudinales 22, 23, 24, ici au nombre de trois, parallèles entre elles définissent les côtés longitudinaux des logements à l'intérieur du compartiment de chauffe 30, et le cas échéant les côtés longitudinaux de ce compartiment de chauffe. Parmi les parois longitudinales, on distingue deux parois latérales 22, 24 et une paroi intermédiaire 23 disposée entre ces parois latérales 22, 24. Les parois verticales 21 s'étendent sensiblement perpendiculairement à ces parois longitudinales 22, 23, 24 depuis une paroi longitudinale 22, 23, 24 à l'autre. Selon l'exemple de réalisation de l'invention, les parois longitudinales 22, 23, 24 s'étendent au moins selon toute la longueur des éléments chauffants 5.

On définit deux logements distincts dans le compartiment de chauffe 30 séparés l'un de l'autre par la paroi longitudinale intermédiaire 23. Un premier logement est défini par une première paroi longitudinale latérale 22, les parois verticales 21 et la paroi longitudinale intermédiaire 23, tandis qu'un deuxième logement est défini par une deuxième paroi latérale 24, les parois verticales 21 et la paroi intermédiaire 23. Les logements sont fermés à une première extrémité longitudinale par une paroi de fond 25 et à l'extrémité opposée par l'interface de connexion 100 lorsque celle-ci est rapportée sur le cadre 3, comme cela est visible sur la figure 1 notamment. La paroi de fond 25 et l'interface de connexion 100 s'étendent dans des plans parallèles définis par l'axe transversal T et l'axe vertical V.

Avantageusement, le cadre 3, défini par ses parois 21, 22, 23, 24, 25, peut être réalisé monobloc. Les éléments chauffants 5 sont alors insérés selon l'axe longitudinal L en direction de la paroi du fond 25 puis l'interface de connexion 100 est rendue solidaire du cadre 3 de manière à fermer l'accès aux logements. Alternativement, le cadre 3 est réalisé en deux coquilles, avec la première coquille comprenant la face avant ajourée du cadre 3 et la deuxième coquille comprenant la face arrière ajourée du cadre 3. Dans ce cas, la direction d'insertion des éléments chauffants peut être la même que précédemment ou suivre l'axe transversal T en direction d'une des deux coquilles.

Les logements peuvent présenter des tailles variables en fonction de la distance séparant les parois 21, 22, 23, 24, 25 délimitant chaque logement. Le premier logement est ici dimensionné pour recevoir un élément chauffant 51 équipé de deux éléments radiants tandis que le deuxième logement est dimensionné pour recevoir un élément chauffant 52 équipé de trois éléments radiants, tel que cela est notamment référencé sur la figure 11.

On va maintenant décrire l'interface de connexion 100 amené à venir fermer l'ouverture du cadre formant accès pour l'insertion des éléments chauffants 5 à l'intérieur du compartiment de chauffe.

L'interface de connexion 100 comporte une platine 102, qui s'étend perpendiculairement aux parois 21, 22, 23, 24, 25 du cadre 3, lorsque l'interface de connexion est en position de fermeture du cadre, et un fourreau 104 qui s'étend en saillie d'une face externe 105 de la platine 102, c'est-à-dire une face tournée à l'opposé du cadre, en définissant une cavité de réception de moyens de raccordement à un réseau électrique ici non représentés.

L'interface de connexion comporte des éléments de fixation mécanique pour assurer la position du dispositif de chauffage électrique additionnel dans une installation de chauffage, de ventilation et/ou de climatisation, ces éléments de fixation mécanique étant agencés aux extrémités verticales de la platine et prenant la forme de pattes de fixation 106 dans lesquelles des trous de fixation 108 permettent la coopération de moyens de vissage avec des moyens taraudés solidaires du conduit de l'installation de chauffage, de ventilation et/ou de climatisation. On comprend que d'autres moyens de fixation mécanique pourront être mis en œuvre sans sortir du contexte de l'invention, par des opérations de soudage, de clinchage, de collage ou de clipsage par exemple.

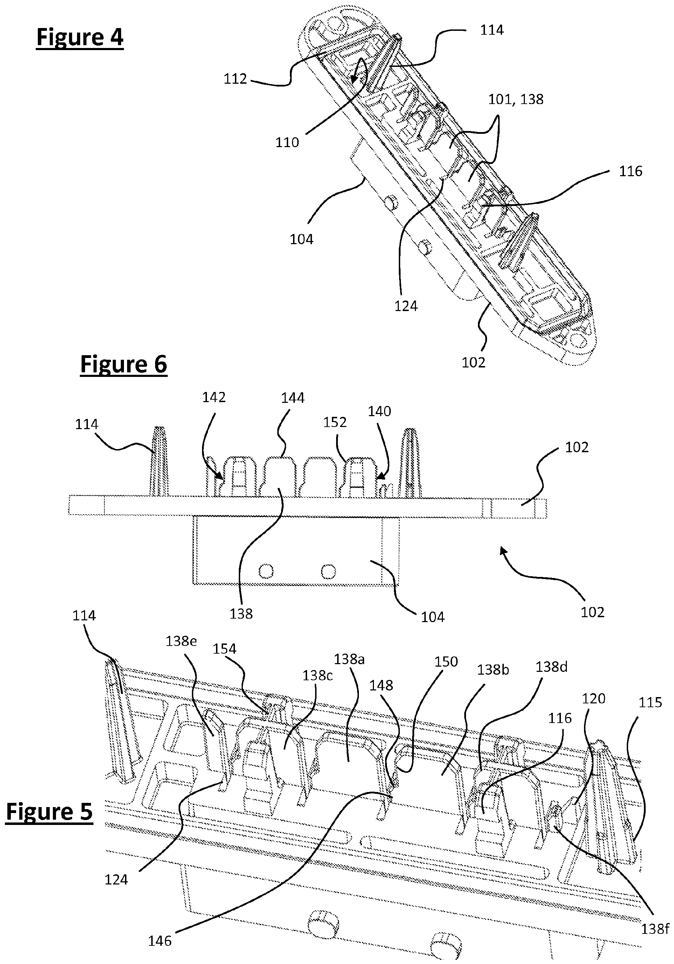

Par ailleurs, la platine 102 comporte sur sa face interne 110, c'est-à-dire la face tournée vers le cadre, une rainure périphérique 112, notamment visible sur la figure 4, dans laquelle on peut prévoir de positionner un joint pour assurer l'étanchéité à l'air entre l'intérieur de l'installation de chauffage, de ventilation et/ou de climatisation où s'étendent les éléments chauffants et l'extérieur de l'installation où s'étend la platine 102 et notamment le fourreau 104 de l'interface de connexion.

L'interface de connexion électrique comprend également au moins un pion de positionnement 114 qui s'étend en saillie de la platine, depuis la face interne 110 de cette dernière. Ce pion de positionnement 114 a pour effet de coopérer, pour le guidage lors de la mise en place de l'interface de connexion sur le cadre, avec un fût 113 de dimensions correspondantes ménagé sur le cadre. Dans l'exemple illustré, l'interface de connexion électrique 100 comporte deux pions de positionnement 114 agencés de part et d'autre du dispositif de limitation du cisaillement 101 qui va être décrit ci-après.

Chaque pion de positionnement 114 présente une forme conique, avec une section en croisillon, et les pions de positionnement s'étendent parallèlement l'un de l'autre avec une orientation des croisillons décalée angulairement, notamment de 90°, d'un pion par rapport à l'autre. Par ailleurs, un des pions de positionnement présente à sa base, au niveau de la jonction avec la platine, une surépaisseur 115 d'au moins une des branches formant le croisillon, de sorte que l'on assure un effort en fin de guidage qui participe à un positionnement précis de l'interface de connexion 100 sur le cadre 3.

Par ailleurs, l'interface de connexion électrique 100 comporte au moins un doigt d'encliquetage 116 configuré pour coopérer avec un alésage 118 formé dans une paroi du cadre du dispositif de chauffage électrique. Lors du montage de l'interface de connexion électrique sur le cadre, une déformation élastique permet l'insertion du doigt d'encliquetage dans l'alésage. On saura décrire ci-après l'interaction entre le dispositif de limitation du cisaillement selon l'invention et les moyens de fixation par encliquetage et l'intérêt d'une telle interaction.

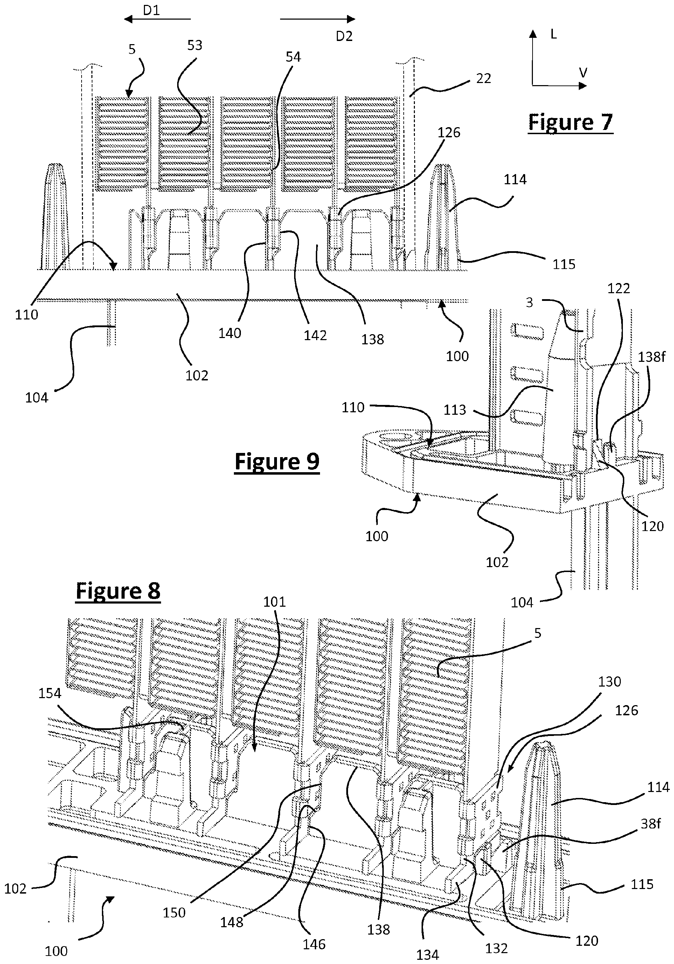

En se référant aux figures 3 à 9, on peut également noter que la platine de l'interface de connexion comporte un picot 120, disposé en bordure du dispositif de limitation du cisaillement 101. Ce picot est positionné et dimensionné pour coopérer avec une empreinte 122 réalisée dans l'une des parois délimitant le cadre. Lors de la solidarisation du cadre et de l'interface de connexion, le picot 120 est destiné à venir loger dans l'empreinte 122, tel que cela est visible sur la figure 9. Le picot peut former de la sorte un moyen de détrompage du montage de l'interface de connexion.

L'interface de connexion 100 présente des encoches 124 (visibles notamment sur la figure 4) qui traversent la platine 102 en s'étendant depuis la face interne 110 jusqu'à la face externe 105 de cette platine. Les encoches 124 débouchent sur la face externe 105 à l'intérieur du fourreau 104, dont les dimensions sont aptes à permettre la réception dans ce fourreau 104 de moyens de raccordement électrique sources, c'est-à-dire des moyens directement reliés au réseau du véhicule.

Dans l'exemple illustré, dans lequel le cadre 3 est configuré pour loger cinq éléments radiants, l'interface est munie de cinq encoches dimensionnées pour recevoir respectivement un terminal de raccordement 126 agencé en extrémité d'une électrode associée à un élément radiant 5. Ces encoches sont régulièrement réparties, c'est-à-dire qu'elles sont espacées les unes des autres d'une valeur constante.

Sur la figure 2, on voit l'extrémité libre de terminaux de raccordement électriques 126, débouchant des encoches à l'intérieur du fourreau 104, qui sont aptes à coopérer avec les moyens de raccordement électrique sources lorsque ceux-ci sont emmanchés dans le fourreau 104. Les terminaux de raccordement électriques 126 sont, tel que cela est notamment visible sur la figure 8, rendus solidaires d'électrodes 54 des éléments chauffants, et ils traversent les encoches 124 (visibles sur la figure 2) pour permettre de connecter, avec des moyens de raccordement disposés d'un côté de l'interface de connexion, les éléments chauffants disposés de l'autre côté de cette interface. On comprend, notamment par l'illustration de la figure 2, que les encoches 124 présentent une section définie pour recevoir et guider à travers la platine de l'interface de connexion ces terminaux de raccordement électriques 126, afin qu'ils puissent d'une part être solidaires des électrodes 54 à l'intérieur du cadre du dispositif et qu'ils puissent d'autre part s'étendre dans le fourreau 104 en saillie de la face externe 105 de la platine 102.

Tel que cela est notamment visible sur la figure 8, un terminal de raccordement électrique 126 au faisceau électrique du véhicule est disposé sur l'extrémité libre de chacune des électrodes prolongeant les éléments chauffants à une extrémité proximale. Le terminal électrique de raccordement présente notamment une partie de fixation 130 à l'électrode et une partie de raccordement formée par une languette 132 qui s'étend dans le prolongement de l'électrode.

La partie de fixation 130 à l'électrode prend la forme d'un manchon de largeur légèrement supérieure à la largeur de l'électrode (visible sur la figure 8), de manière à pouvoir entourer l'électrode associée et être rendu solidaire de celle-ci par soudage ou sertissage par exemple, ou encore par clinchage.

La partie de raccordement comporte la languette 132 dont la largeur est sensiblement égale à celle de l'électrode, et elle comporte en outre deux ailettes 134 qui s'étendent en saillie de chaque côté de la partie de raccordement de manière à former une butée par épaulement au déplacement longitudinal du terminal. L'extrémité libre de la languette peut présenter un léger biseau 136 (visible sur la figure 2), notamment pour faciliter son insertion dans l'encoche correspondante.

Il résulte de l'épaisseur des différentes parties du terminal électrique une surépaisseur au niveau de la partie de fixation à l'électrode 130.

On va maintenant décrire plus en détails le dispositif de limitation de cisaillement 101 tel qu'il est agencé dans l'interface de connexion selon l'invention, en se référant notamment aux figure 3 à 9.

Le dispositif de limitation de cisaillement 101 est ménagé sur la face interne 110 de la platine, et il s'étend en saillie de cette face interne, au voisinage de chacune des encoches 124.

Le dispositif de limitation du cisaillement a pour rôle d'augmenter la longueur de la zone de contact entre l'interface de connexion électrique et le terminal de raccordement, de manière à ce que ce terminal ne soit pas uniquement maintenu sur la hauteur de l'encoche, c'est-à-dire sur l'épaisseur de la platine, mais qu'il soit guidé sur une dimension longitudinale, selon la direction d'insertion des terminaux de raccordement dans l'encoche, plus importante que l'épaisseur de la platine. On dispose ainsi un élément en saillie de la platine qui est configuré de sorte à ce qu'il s'étende le long, au contact ou immédiatement en regard, de la partie du terminal de raccordement non enfoncée dans l'encoche. Cet élément en saillie de la platine s'étend en direction du cadre, pour augmenter la zone de contact avec le terminal de raccordement et l'électrode du côté de l'élément chauffant, c'est-à-dire du côté susceptible de vibrer le plus.

Selon une caractéristique de l'invention, le dispositif de limitation du cisaillement comporte au moins une paire de nervures 138 agencées de part et d'autre d'une des encoches. Dans l'exemple illustré sur les figures où l'interface de connexion comporte dans sa platine cinq encoches, on prévoit cinq paires de nervures, chaque paire étant respectivement associée à l'une des encoches.

On assure ainsi une tenue du terminal de raccordement de part et d'autre de ce terminal, et on limite fortement, par le contact ou la proximité immédiate d'une paroi de butée formée par un bord de nervure, le débattement possible des éléments chauffants et le risque de cisaillement qui en découle.

Les nervures 138 sont orientées perpendiculairement à l'orientation de l'encoche associée.

Dans l'exemple illustré, les encoches s'étendent selon une direction transversale et les nervures s'étendent principalement selon une direction verticale. Il est notable que dans l'exemple illustré, les nervures sont alignées les unes à la suite des autres, en formant une ligne directrice sur laquelle sont disposées les nervures. L'alignement de ces nervures est centré par rapport aux encoches, de sorte que la ligne directrice résultante de l'alignement des nervures passe au milieu du segment formé par l'une ou l'autre des encoches.

Les nervures 138 présentent une forme de plaque, de faible épaisseur, qui présente deux bords latéraux 140, 142 issus de matière de la platine et un bord d'extrémité libre 144, parallèle au plan dans lequel est inscrite la platine. Il est possible de caractériser les encoches par chacune de ces dimensions selon la direction longitudinale, verticale et transversale.

Dans la direction longitudinale, c'est-à-dire la direction selon laquelle la nervure s'étend en éloignement de la platine, au moins une nervure s'étend de sorte que l'extrémité libre 144 de la nervure est en regard de la partie de fixation 130 à l'électrode du terminal de raccordement lorsque l'élément chauffant est monté dans sa position de raccordement avec le terminal de raccordement inséré dans l'encoche correspondante. Dans l'exemple illustré, chacune des nervures 138 s'étend longitudinalement de la sorte, à l'exception d'une nervure disposée à l'extrémité de l'alignement des nervures. A titre d'exemple, la hauteur des plus grandes nervures, c'est-à-dire leur dimension dans la direction longitudinale, est comprise entre 10 et 12mm.

Dans la direction transversale, les nervures 138 présentent une épaisseur d'environ 1,5 à 2mm, c'est-à-dire une épaisseur d'environ 15 à 30% de la dimension correspondante de l'encoche, l'encoche pouvant présenter à titre d'exemple une longueur dans cette direction transversale comprise entre 6 et 8mm.

Dans la direction verticale, au moins une nervure 138 s'étend d'une encoche à l'encoche voisine, sur une distance comprise entre 10 et 12mm.

Tel qu'évoqué précédemment, le dispositif de limitation du cisaillement 101 est formé par une paire de nervures 138 disposées de part et d'autre, selon la direction verticale, d'une encoche et donc de part et d'autre du terminal de raccordement destiné à venir en prise dans l'encoche. Le dispositif de limitation du cisaillement 101 est configuré de sorte que chacune des nervures soit en contact, ou à tout le moins très proche par complémentarité de formes, avec le terminal de raccordement venant se loger entre les nervures. On augmente ainsi la longueur de la zone de contact entre les nervures et les terminaux de raccordement selon la direction longitudinale, c'est-à-dire la direction d'insertion des éléments chauffants dans les encoches. La forme précédemment décrite du terminal de raccordement implique une surépaisseur dans la direction verticale au niveau du manchon formant la partie de fixation à l'électrode, et la forme des nervures venant en regard du terminal de raccordement est impactée par cette surépaisseur.

De la sorte, pour une paire de nervures venant de part et d'autre d'une encoche, une première nervure 138 présente un bord latéral droit 140 et une deuxième nervure 138b présente un bord latéral au profil accidenté 142.

Selon une caractéristique de l'invention, au moins une nervure 138 est commune à deux paires de nervures successives. En d'autres termes, une nervure peut présenter un bord latéral droit 140 et un bord latéral au profil accidenté 142 et participer à la formation d'une part d'une première paire de nervures agencées de part et d'autre d'une première encoche, en présentant son bord latéral droit en regard du bord latéral au profil accidenté d'une autre nervure, et d'autre part d'une deuxième paire de nervures agencées de part et d'autre d'une deuxième encoche, en présentant cette fois son bord latéral au profil accidenté en regard du bord latéral droit d'une autre nervure. On comprend que pour réaliser ceci, il convient que cette nervure s'étende selon la direction verticale d'une encoche à l'autre.

Il est dès lors possible de réaliser plusieurs nervures 138 successives, ici quatre selon l'exemple illustré, qui présentent au moins des bords latéraux identiques, à savoir un premier bord latéral droit et un deuxième bord latéral au profil accidenté. Dans l'exemple illustré sur les figures, au moins deux nervures centrales sont identiques.

Le bord latéral au profil accidenté 142 des nervures présente successivement depuis la platine une portion proximale 146, une portion intermédiaire 148 et une portion distale 150. La portion proximale participe à former la base de la nervure, qui s'étend depuis la platine perpendiculairement à cette platine et au voisinage direct de l'encoche. Par au voisinage direct de l'encoche, on comprend que le bord latéral de la nervure et le bord délimitant l'encoche sont disposés dans un même plan.

La portion distale 150 forme un décrochement par rapport à la portion proximale 146, en retrait par rapport à l'encoche, et la portion intermédiaire 148 séparant la portion proximale et la portion distale de ce bord à profil accidenté est une portion inclinée formant rampe de guidage du terminal de raccordement vers l'encoche correspondante. Par ailleurs, l'extrémité libre de la portion distale, c'est-à-dire le coin de la nervure agencé à l'opposé de la platine, présente un chanfrein 152, de manière à former là encore une pente pour le guidage du terminal de raccordement vers l'encoche.

Les nervures agencées en bout de la série formée par la pluralité de nervures présentent ici une forme distincte du fait de l'espace disponible au niveau de la jonction du cadre et de la platine et du fait que pour une nervure agencée à l'extrémité de la série, un seul de ses bords latéraux a une fonction de limitation du cisaillement. Dès lors, au moins une de ces nervures 138e, 138f agencées au bout de la série peut présenter une dimension plus petite que la dimension correspondante des autres nervures.

Une première nervure d'extrémité 138e est formée essentiellement dans la direction longitudinale, c'est-à-dire la direction perpendiculaire à la platine, en prenant la forme d'un pion, de dimension selon la direction verticale moindre de celle des autres nervures et de dimension selon la direction longitudinale égale à celle des autres nervures. De la sorte, le bord latéral droit 140 que cette première nervure d'extrémité 138e présente en regard d'une nervure voisine forme partie du dispositif de limitation de cisaillement agissant sur toute la hauteur du terminal de raccordement correspondant.

Une deuxième nervure d'extrémité 138f consiste en une nervure partielle dépourvue de la portion distale. Cette deuxième nervure est ainsi réduite à un picot dont le bord latéral à profil accidenté 142 présente uniquement la portion proximale formant base au voisinage direct de l'encoche et le plan incliné de guidage en position du terminal de raccordement. On comprend que dans ce cas, la fonction de maintien du terminal de raccordement réalisée par la portion proximale est obtenue par la présence d'une paroi du cadre 3, représentée en un trait pointillé sur la figure 7.

Tel que cela est particulièrement visible à titre d'exemple sur la figure 5, deux nervures 138c, 138d sont respectivement solidaires d'un doigt d'encliquetage 116, par l'intermédiaire d'une branche de fixation 154 s'étendant perpendiculairement à la nervure. La branche de fixation rigidifie le doigt d'encliquetage, d'autant plus que la branche est ici agencée dans la direction dans laquelle le doigt d'encliquetage serait susceptible de se déformer lors de la fixation par encliquetage du cadre avec l'interface de connexion. L'élasticité nécessaire à la fixation par encliquetage est alors obtenue principalement par déformation du cadre portant l'alésage.

On va maintenant décrire le montage d'un dispositif de chauffage additionnel et sa mise en œuvre dans une installation de chauffage, de ventilation et/ou de climatisation.

Les éléments chauffants sont insérés dans les logements formés dans le cadre, du côté de l'ouverture amené à être fermée par la suite par l'interface de connexion 100. Les éléments chauffants sont poussés jusqu'au fond du cadre, et seules les extrémités libres des électrodes, munies des terminaux de raccordement 126, dépassent du cadre par l'ouverture d'insertion.

On ferme alors le cadre en rapportant l'interface de connexion électrique en recouvrement de cette ouverture, et en tachant de faire correspondre successivement les pions de positionnement 114 solidaires de l'interface de connexion 100 avec les futs 113 solidaires du cadre (visibles notamment sur les figures 1 et 3), le picot 120 avec l'empreinte 122 formée dans une paroi du cadre (visibles notamment sur la figure 9), puis les doigts d'encliquetage 116 avec les alésages 118 correspondants formés dans le cadre (visibles notamment sur la figure 1).

Tel que cela a été précisé précédemment, la rigidification des doigts d'encliquetage 116 par le raccordement aux nervures 138 implique une fixation de l'interface de connexion 100 sur le cadre par une déformation élastique de la paroi proximale du cadre pour laisser passage aux doigts d'encliquetage 116 vers les alésages.

Au fur et à mesure du rapprochement de l'interface de connexion 100 et du cadre, on comprend que les extrémités libres des terminaux de raccordement 126 se rapprochent de la face interne 110 de la platine 102, et donc des encoches 124 qui débouchent sur cette face interne. Dans un premier temps, les extrémités libres des terminaux de raccordement 126 s'insèrent entre deux bords d'extrémité libre 144 (référencés sur la figure 6) des nervures 138 d'une paire formant un dispositif de limitation de cisaillement 101 puis elles sont guidées, notamment par la rampe formée par la partie intermédiaire 148 du bord à profil accidenté 142 d'une des nervures de cette paire, vers l'encoche 124.

Le cadre, les éléments chauffants et l'interface de connexion électrique sont dimensionnés de sorte qu'à la fin du montage du dispositif de chauffage additionnel, c'est-à-dire lorsque les doigts d'encliquetage 116 de l'interface de connexion sont logés dans les alésages 118 formés dans le cadre, les terminaux de raccordement 126 ont traversé les encoches pour se trouver en saillie de la face externe de la platine, dans le fourreau, dans la position illustrée sur la figure 2, pour pouvoir être connectés électriquement à un réseau source. Dans cette position, les ailettes 134 viennent en appui contre la face interne de la platine et le manchon de raccordement est emmanché, ou à tout le moins enserré, entre les bords latéraux en regard de deux nervures voisines formant par paire un dispositif de limitation de cisaillement.

Par ailleurs, et tel que cela est particulièrement visible sur la figure 7 dans laquelle on a représenté la paroi proximale du cadre en pointillés, les nervures 138 s'étendent sur une dimension telle qu'elles ne dépassent pas de la paroi proximale du cadre, et donc telle qu'elles ne se retrouvent pas dans le flux d'air amené à traverser les éléments chauffants du dispositif de chauffage additionnel lorsque celui-ci est en place dans l'installation de ventilation, de chauffage, et/ou de climatisation .

On pourra par ailleurs prévoir que les nervures 138 viennent en appui contre l'ailette de l'élément chauffant la plus proche de l'interface de connexion et directement en regard de la nervure correspondante, et il sera dans ce contexte intéressant de prévoir une dimension longitudinale de la paroi proximale du cadre pour que la nervure puisse être au contact de l'ailette et pour que simultanément la nervure ne se trouve pas dans le flux d'air.

Lorsque le dispositif de chauffage additionnel est monté sur l'installation de ventilation, de chauffage, et/ou de climatisation, les vibrations subies par le dispositif de chauffage additionnel génèrent des déplacements des éléments chauffants à l'intérieur du cadre, notamment selon la direction verticale. Ces déplacements sont limités dans le dispositif de chauffage additionnel comportant une interface de connexion 100 selon l'invention, du fait de la présence d'un bord latéral droit 140 d'une première nervure contre le terminal de raccordement 126 lorsque les éléments chauffants sont déplacés selon un sens de déplacement T1 visible sur la figure 7, et du fait de la présence d'un bord latéral à profil accidenté 142 d'une deuxième nervure contre le terminal de raccordement lorsque les éléments chauffants sont déplacés selon un deuxième sens de déplacement T2 visible sur la même figure 7.

Du fait de la présence du dispositif de limitation du cisaillement, c'est-à-dire la présence de composants permettant d'augmenter la zone de contact entre l'interface de connexion électrique et les terminaux de raccordement selon la direction la direction d'insertion des éléments chauffants dans les encoches de l'interface de connexion, le risque de cisaillement est limité. On comprend toutefois qu'un effet de cisaillement résiduel de moindre amplitude peut être identifié à l'extrémité de la zone de contact, lorsque les nervures ne sont plus au contact ou au proche voisinage des électrodes via le terminal de raccordement. Et on comprend que plus les éléments chauffants sont soumis à des vibrations, plus cet effet de cisaillement résiduel augmente.

Le dispositif de chauffage additionnel selon l'invention peut dès lors comporter, en complément du dispositif de limitation du cisaillement précédemment décrit, un dispositif de limitation du débattement des éléments chauffants fixé sur le cadre.

Plus particulièrement, et en se référant aux figures 10 et 11, le dispositif de limitation du débattement comporte une pièce que l'on vient poser contre une face du cadre, en appui sur au moins une paroi délimitant le cadre de manière à recouvrir partiellement des éléments chauffants, et cette pièce comporte une ou plusieurs ouvertures configurées pour recevoir chacune un pion solidaire du cadre. Le pion est configuré pour être déformé plastiquement lorsqu'il se trouve à l'intérieur de l'ouverture, de manière à plaquer le dispositif de limitation du débattement contre les éléments chauffants en figeant la position de ce dispositif de limitation du débattement sur le cadre et de manière à exercer une force d'appui pour les plaquer dans leur logement dans le cadre.

Au moins une des parois 21, 22, 23, 24, 25 formant au moins un des logements des éléments chauffants comprend au moins un pion 4 configuré pour s'insérer dans une ouverture ménagée sur le dispositif de limitation du débattement 10 des éléments chauffants 5, 51, 52. Les pions 4 s'étendent, en saillie de la paroi dont ils sont issus, à l'opposé du compartiment de chauffe 30. Les pions sont ainsi orientés vers l'extérieur du dispositif de chauffage électrique 10.

Les pions 4 sont localisés, ici, sur les parois longitudinales 22, 23, 24, qu'elles soient latérales ou intermédiaire. Plus particulièrement, les pions 4 peuvent être regroupés par ensemble dans lequel ils sont alignés selon l'axe vertical V du dispositif de chauffage 10, et chaque ensemble de pions alignés est destiné à coopérer avec un même dispositif de limitation du débattement 10. Par « alignés » on entend qu'il existe une droite imaginaire passant par chacun des centres des faces libres des pions 4, cette droite imaginaire étant parallèle à l'axe vertical V du dispositif de chauffage 10. Les pions 4 sont venus de matière avec la paroi 22, 23, 24 du logement, notamment par une unique opération de moulage.

Une même paroi comprend autant de pion(s) 4 qu'un nombre de dispositif(s) de limitation du débattement 10 prévu sur le cadre 3. Selon l'exemple de réalisation illustré par les figures, chaque paroi longitudinale 22, 23, 24 comprend deux pions 4 situés à deux extrémités opposées de la paroi longitudinale 22, 23, 24, de sorte qu'on forme deux ensembles de pions alignés tel que précédemment définis, aptes à coopérer respectivement avec un dispositif de limitation du débattement. Ainsi, deux dispositifs de limitation du débattement 10 sont prévus pour coopérer avec ce cadre 3. Il est à noter que, s'il est évident que les pions 4 d'un même ensemble sont situés sur une même face du cadre, les deux ensembles peuvent être situés sur une même face du cadre 3, c'est-à-dire sur la face avant ou sur la face arrière, ou bien sur deux faces opposées, c'est-à-dire un premier ensemble de pions alignés disposé sur la face avant et un deuxième ensemble de pions alignés disposé sur la face arrière.

Comme on peut le voir notamment sur la figure 11, les parois longitudinales comprenant un pion 4 comprennent également des dégagements 45 situés longitudinalement de part et d'autre de chaque pion 4. Les dégagements 45 correspondent à des évidements réalisés ici dans les parois longitudinales 22, 23, 24, permettant de prévoir un espace pour accueillir le dispositif de limitation du débattement 10. Chaque dégagement 45 s'étend, selon l'axe longitudinal L, à partir d'un pion 4 jusqu'à un épaulement, et sur une dimension longitudinale sensiblement égale à la dimension longitudinale du pion, et chaque dégagement 45 s'étend selon l'axe vertical V sur toute la dimension de la paroi longitudinale 22, 23, 24 correspondante, de manière à traverser complètement cette paroi longitudinale.

La figure 1 illustre un dispositif de chauffage 1 comprenant le cadre 3 et deux dispositifs de limitation du débattement 10 coopérant avec ce cadre 3, l'ensemble formé par le cadre et les dispositifs de limitation du débattement 10 étant dans une position de pré-positionnement, c'est-à-dire une position dans laquelle les pions sont dans leur forme d'origine, non encore déformés plastiquement, et la figure 11 illustre le même ensemble avec les dispositifs de limitation du débattement qui sont dans une position figée de fixation suite à la déformation plastique des pions.

On peut observer que, dans la position de pré-positionnement, le dispositif de limitation du débattement 10 est engagé dans les dégagements 45 prévus de part et d'autre de chaque pion 4 et qu'il comprend des ouvertures 11 dimensionnées pour être traversées par les pions 4.

On remarque que chaque pion 4 présente une épaisseur, mesurée selon l'axe transversal T, telle que le pion 4 dépasse du dispositif de limitation du débattement 10 lorsque celui-ci est engagé sur le cadre 3. Autrement dit, chaque pion 4 présente une épaisseur supérieure à une épaisseur du dispositif de limitation du débattement 10 au niveau de l'ouverture 11, les épaisseurs étant mesurées le long de l'axe transversal T. Cette différence d'épaisseurs ainsi que la localisation du pion 4 peuvent permettre de rendre accessible le pion 4 à un outil dédié à la déformation plastique de ce pion 4. En effet, le pion 4 est destiné à être déformé à l'intérieur de l'ouverture 11, tout en évitant que le dispositif de limitation du débattement 10 soit déformé durant ce processus. La déformation plastique du pion 4 a pour but d'assurer la fixation du dispositif de limitation du débattement 10 sur le cadre 3, de préférence en montage serré, ce qui permet de limiter le débattement voire d'exercer une force de maintien sur les éléments chauffants 5, 51, 52.

La déformation plastique peut se faire par l'intermédiaire d'un processus de déformation à chaud telle que par une technique de bouterollage à chaud ou à ultrasons. Ainsi, sous l'effet de la chaleur, le pion 4 fond et s'expanse dans l'ouverture 11 du dispositif de limitation du débattement 10. La matière ainsi ramollie adhère à la paroi délimitant l'ouverture lors de son refroidissement. Le fait que le pion 4 dépasse du dispositif de limitation du débattement 10 permet de fournir un surplus de matière afin de s'assurer que le pion 4 remplisse l'ouverture 11 une fois la déformation plastique à chaud réalisée et que le cas échéant, une partie de la matière du pion déformée s'étale sur la surface du dispositif de limitation du débattement 10, notamment autour de l'ouverture 11. A cet effet, la surface du dispositif de limitation du débattement 10 peut comprendre une zone d'accueil pour la partie du pion 4 déformé plastiquement débordant de l'ouverture 11.

Il est notable que la déformation plastique est faite sous contrainte d'une machine- outil qui participe à plaquer le dispositif de limitation du débattement contre les éléments chauffants, et qui peut avantageusement maintenir une pression pour continuer à plaquer ces éléments jusqu'au refroidissement de la matière déformée du pion et son adhésion aux parois délimitant l'ouverture et/ou à la zone d'accueil de la surface autour de l'ouverture.

Après déformation plastique des pions 4, le dispositif de limitation du débattement 10 coopère avec le cadre 3 de manière à exercer une force F perpendiculaire au plan médian M du cadre 3 permettant ainsi de plaquer les éléments chauffants 5, 51, 52, notamment contre la ou les parois verticales 21 situées à l'opposé du dispositif de limitation du débattement 10. Autrement dit, la force F exercée pour le maintien des éléments chauffants 5, 51, 52 suit une direction parallèle à une direction suivie par le flux d'air F1 circulant au travers du système de chauffage électrique.

Une telle fixation permet d'assurer un maintien des éléments chauffants 5, 51, 52 en limitant les débattements selon une direction qui peut être aussi bien perpendiculaire au plan médian M du cadre 3 que parallèle à ce plan médian M, tout en s'affranchissant d'éléments élastiques susceptibles de vibrer et de se casser.

Il convient de noter que la force exercée par le dispositif de limitation du débattement pour le maintien des éléments chauffants est perpendiculaire à la direction d'allongement de la zone de contact formée par le dispositif de limitation du cisaillement, c'est-à-dire la direction d'insertion des éléments chauffants dans les encoches formées dans l'interface de connexion.

On peut noter sur la figure 1 ou sur la figure 11 que le dispositif de limitation du débattement 10 présente une dimension, mesurée selon l'axe vertical V, au moins égale et ici supérieure à la dimension correspondante du compartiment de chauffe 30. Ainsi, un unique dispositif de limitation du débattement 10 peut limiter le débattement de l'ensemble des éléments chauffants 5, 51, 52 présents dans le compartiment de chauffe 30.

Ces figures 1 et 11 montrent également que, contrairement aux parois verticales 21, le dispositif de limitation du débattement 10 comprend une face interne 12, c'est-à-dire une face tournée vers le compartiment de chauffe, qui est sensiblement plane pour venir au contact des éléments chauffants 5, 51, 52. Les parois verticales 21, quant à elles, comprennent un décrochement médian autorisant le passage d'un joint de colle (ici non représenté) reliant les électrodes 54, les résistances CTP 55 et les éléments radiants 53 et qui dépasse légèrement en saillie transversale des éléments chauffants. De plus, un jeu est prévu entre les parois verticales 21 et les éléments chauffant 5, 51, 52 afin de permettre une insertion des éléments chauffants 5, 51, 52 dans leurs logements 7, 71, 72 respectifs sans effort.

La figure 10 illustre plus en détail le dispositif de limitation du débattement 10, et notamment une deuxième face, ou face externe, 13 opposée à la face interne 12, c'est-à-dire tournée vers l'extérieur du dispositif de chauffage 1 lorsque le dispositif de limitation du débattement est monté sur le cadre. Cette face externe 13 comprend ici des nervures de rigidification 14 entourant des fenêtres 15 ménagées sur le dispositif de limitation du débattement 10. Ces fenêtres autorisent le flux d'air F1 à circuler à travers. Avantageusement, il y a autant de fenêtre(s) 15 qu'il y a de logement(s) prévus dans le cadre 3. Les fenêtres 15 sont donc ici au nombre de deux, avec des hauteurs respectives, mesurées selon l'axe vertical, proportionnelles aux hauteurs des logements de manière à respectivement surplomber un logement. Ainsi, la fenêtre 15 ayant la plus grande hauteur est destinée à se superposer au deuxième logement, c'est-à-dire celui ayant la plus grande hauteur également, tandis que la fenêtre 15 ayant la plus petite hauteur est destinée à se superposer au premier logement, c'est-à-dire celui ayant la plus petite hauteur.

Dans l'exemple illustré, le dispositif de limitation du débattement 10 comprend trois ouvertures 11 configurées pour recevoir les pions 4 qui, eux, sont solidaires du cadre 3. Plus précisément, les ouvertures sont dimensionnées de manière à ce qu'après déformation plastique, le pion 4 déformé remplisse toute l'ouverture 11. Par remplir l'ouverture 11, on entend que le pion 4 la bouche au moins en partie afin que le matériau déformé du pion adhère au moins aux parois délimitant l'ouverture pour figer la position du dispositif de limitation du débattement 10 sur le cadre 3. Tout comme les pions 4, il est à noter que les ouvertures 11 sont au nombre de N+1 avec N correspondant à un nombre de logements 7, 71, 72 prévus dans le cadre 3.

Dans l'exemple illustré, les ouvertures 11 présentent chacune un centre aligné sur un axe médian du dispositif de limitation du débattement 10.

Le dispositif de limitation du débattement 10 peut par ailleurs comprendre un système de maintien en position 16, distinct de l'ouverture 11. Ce système de maintien en position 16 participe au pré positionnement du dispositif de limitation du débattement 10 sur le cadre 3 du dispositif de chauffage électrique 1 avant que le ou les pions 4 soient déformés plastiquement et figent la position du dispositif de limitation du débattement 10. Dans la phase de pré-positionnement, on comprend que, en plus de la coopération du pion 4 non déformé et de l'ouverture 11, le dispositif de limitation du débattement 10 est maintenu au cadre 3 à l'aide de ce système de maintien en position 16. Bien entendu, un tel maintien présente un intérêt uniquement avant l'étape de déformation plastique du pion 4. On comprend en effet que ce système de maintien en position 16 permet de relier de manière réversible le dispositif de limitation du débattement 10 au cadre 3, et que cela présente l'intérêt d'éviter une désolidarisation d'un ensemble formé par le dispositif de limitation du débattement 10 et le cadre 3 lors des diverses manipulations avant l'étape de déformation plastique du pion 4 qui a pour but de figer les positions de manière irréversible des composants de cet ensemble.

Plus précisément, ce système de maintien en position 16 comprend au moins un élément d'encliquetage 17 destiné à coopérer avec le cadre 3 et plus précisément avec une fente d'aération 90 prévue sur les barrettes 9 du cadre 3. Dans l'exemple illustré, l'élément d'encliquetage 17 s'étend principalement de manière perpendiculaire à la face interne 12 du dispositif de limitation du débattement 10 et il correspond ici à un doigt 170 comprenant, à son extrémité, un crochet 171.

La description qui précède explique clairement comment l'invention permet d'atteindre les objectifs qu'elle s'est fixés et notamment de proposer un dispositif de chauffage dans lequel le raccordement des éléments chauffants est sécurisé, notamment par l'augmentation de la zone de contact entre l'interface de connexion et les terminaux de raccordement propres à ces éléments chauffants. L'interface de connexion selon l'invention présente ainsi une double fonction, à savoir une fonction de connexion électrique pour permettre le raccordement des modules chauffants à une source d'énergie électrique et une fonction mécanique de limitation du cisaillement qui peut être généré au niveau du raccordement des électrodes dans les encoches appropriées.

## Revendications

1. Interface de connexion électrique (100) pour un dispositif de chauffage électrique pour le chauffage d'un flux d'air circulant à l'intérieur d'une installation de chauffage, de ventilation et/ou de climatisation d'un véhicule automobile, ladite interface de connexion comportant dans une platine (102) au moins une encoche (124) dimensionnée pour la réception d'un terminal de raccordement (126) monté en bout d'une électrode d'un élément chauffant du dispositif de chauffage électrique, **caractérisée en ce qu'**elle comporte au moins un dispositif de limitation du cisaillement (101) du terminal de raccordement qui s'étend en saillie de la platine (102) au voisinage de l'encoche (124), le dispositif de limitation du cisaillement (101) comportant au moins une paire de nervures (138) qui s'étendent respectivement en saillie de la platine (102) en étant agencées de part et d'autre de l'encoche (124) correspondante, l'extrémité libre d'au moins une nervure (138) présente un chanfrein (152) de guidage du terminal de raccordement (126).

2. Interface de connexion électrique selon la revendication 1, **caractérisée en ce que** les nervures (138) d'une paire de nervures sont orientées perpendiculairement à l'orientation de l'encoche (124) correspondante.

3. Interface de connexion électrique selon l'une des revendications 1 ou 2, **caractérisée en ce qu'**elle comporte une pluralité d'encoches (124), et une pluralité de nervures (138) associées par paire à chacune des encoches.

4. Interface de connexion électrique selon la revendication précédente, **caractérisée en ce que** l'ensemble des nervures (138) s'étend perpendiculairement aux encoches (124).

5. Interface de connexion électrique selon l'une des revendications précédentes, **caractérisée en ce que** les nervures (138) sont alignées les unes à la suite des autres.

6. Interface de connexion électrique selon l'une des revendications 3 à 5, **caractérisée en ce qu'**au moins deux nervures (138) successives sont identiques.

7. Interface de connexion électrique selon l'une des revendications 3 à 6, **caractérisée en ce qu'**une nervure (138e, 138f) disposée en bout de la série formée par la pluralité de nervures (138) présente une dimension plus petite que la dimension correspondante des autres nervures (138a, 138b, 138c, 138d).

8. Interface de connexion électrique selon l'une des revendications 3 à 7, **caractérisée en ce qu'**au moins une nervure (138) s'étend d'une encoche (124) à l'encoche voisine.

9. Interface de connexion électrique selon l'une des revendications 1 à 8 **caractérisée en ce que** le dispositif de limitation du cisaillement (101) formé par une paire de nervures (138) est tel qu'une première nervure présente un bord latéral droit (140) et qu'une deuxième nervure présente un bord latéral au profil accidenté (142).

10. Interface de connexion électrique selon la revendication précédente, **caractérisée en ce que** le bord latéral au profil accidenté (142) présente une portion proximale (146) qui s'étend depuis la platine (102) perpendiculairement à cette platine et au voisinage direct de l'encoche (124) et une portion distale (150) formant un décrochement par rapport à la portion proximale, en retrait par rapport à l'encoche.

11. Interface de connexion électrique selon la revendication précédente, **caractérisée en ce que** la portion proximale (146) et la portion distale (150) sont séparées par une portion intermédiaire (148) inclinée formant rampe de guidage du terminal de raccordement (126) vers l'encoche (124) correspondante.

12. Interface de connexion électrique selon les revendications 7 et 10, **caractérisée en ce que** la nervure (138) disposée en bout de la série est formée uniquement par une portion proximale (146) au voisinage direct de l'encoche.

13. Interface de connexion électrique selon l'une des revendications précédentes, **caractérisée en ce qu'**elle comporte au moins un doigt d'encliquetage (116) configuré pour coopérer avec un alésage (118) formé dans une paroi du dispositif de chauffage électrique et **en ce qu'**au moins une nervure (138c,138d) est solidaire de ce doigt d'encliquetage (116).

14. Interface de connexion électrique selon l'une des revendications précédentes, **caractérisé en ce que** la platine (102) comporte en outre un picot (120), disposé en bordure du dispositif de limitation du cisaillement.

15. Dispositif de chauffage additionnel comportant une interface de connexion (100) selon l'une des revendications précédentes et un cadre (3) dans lequel est logé l'au moins un élément chauffant (5), l'interface de connexion étant configurée pour être montée à une extrémité du cadre pour le raccordement du dispositif à un réseau électrique du véhicule et l'alimentation des éléments chauffants.

16. Dispositif de chauffage additionnel selon la revendication précédente, **caractérisé en ce que** le cadre (3) comporte des parois parmi lesquelles au moins une paroi verticale proximale (21) sur laquelle est fixée l'interface de connexion (100).

17. Dispositif de chauffage additionnel selon la revendication précédente, **caractérisé en ce qu'**au moins une nervure (138) s'étend depuis la platine (102) de l'interface de connexion (100) en présentant une dimension perpendiculairement à la platine qui est inférieure à la dimension de la paroi proximale du cadre selon la même direction.

18. Dispositif de chauffage additionnel selon la revendication précédente, **caractérisé en ce qu'**il comporte un dispositif de limitation du débattement des éléments chauffants fixé sur le cadre et comportant une ou plusieurs ouvertures configurées pour recevoir chacune un pion solidaire du cadre, ce pion étant déformé plastiquement à l'intérieur de l'ouverture, de manière à plaquer le dispositif de limitation du débattement contre les éléments chauffants et de manière à exercer une force d'appui pour les plaquer dans leur logement dans le cadre.

## Patentansprüche

1. Elektrische Anschlussschnittstelle (100) für ein elektrisches Heizgerät zum Erhitzen eines Luftstroms, der im Inneren einer Heizungs-, Belüftungs- und Klimatisierungseinrichtung eines Kraftfahrzeugs umläuft, wobei die Anschlussschnittstelle in einer Platine (102) mindestens eine Aussparung (124) aufweist, die zur Aufnahme eines Anschlussterminals (126) bemessen ist, das am Ende einer Elektrode eines Heizelements des elektrischen Heizgeräts montiert ist, **dadurch gekennzeichnet, dass** sie mindestens eine Vorrichtung (101) zur Begrenzung des Abscherens des Anschlussterminals aufweist, die sich von der Platine (102) vorspringend in der Nähe der Aussparung (124) erstreckt, wobei die Abscherbegrenzungsvorrichtung (101) mindestens ein Paar Rippen (138) aufweist, die sich jeweils vorspringend von der Platine (102) erstrecken, indem sie beiderseits der entsprechenden Aussparung (124) angeordnet sind, wobei das freie Ende mindestens einer Rippe (138) eine Schräge (152) zum Führen des Anschlussterminals (126) aufweist.

2. Elektrische Anschlussschnittstelle nach Anspruch 1, **dadurch gekennzeichnet, dass** die Rippen (138) eines Paars Rippen senkrecht zu der Ausrichtung der entsprechenden Aussparung (124) ausgerichtet sind.

3. Elektrische Anschlussschnittstelle nach einem der Ansprüche 1 oder 2, **dadurch gekennzeichnet, dass** sie eine Vielzahl von Aussparungen (124) und eine Vielzahl von Rippen (138) aufweist, die jeder der Aussparungen paarweise zugeordnet sind.

4. Elektrische Anschlussschnittstelle nach dem vorhergehenden Anspruch, **dadurch gekennzeichnet, dass** sich die Gesamtheit der Rippen (138) senkrecht zu den Aussparungen (124) erstrecken.

5. Elektrische Anschlussschnittstelle nach einem der vorhergehenden Ansprüche, **dadurch gekennzeichnet, dass** die Rippen (138) aufeinander ausgerichtet sind.

6. Elektrische Anschlussschnittstelle nach einem der Ansprüche 3 bis 5, **dadurch gekennzeichnet, dass** mindestens zwei aufeinanderfolgende Rippen (138) identisch sind.

7. Elektrische Anschlussschnittstelle nach einem der Ansprüche 3 bis 6, **dadurch gekennzeichnet, dass** eine Rippe (138e, 138f), die am Ende der durch die Vielzahl von Rippen (138) gebildeten Reihe angeordnet ist, eine kleinere Abmessung als die entsprechende Abmessung der anderen Rippen (138a, 138b, 138c, 138d) hat.

8. Elektrische Anschlussschnittstelle nach einem der Ansprüche 3 bis 7, **dadurch gekennzeichnet, dass** sich mindestens eine Rippe (138) von einer Aussparung (124) zu der benachbarten Aussparung erstreckt.

9. Elektrische Anschlussschnittstelle nach einem der Ansprüche 1 bis 8, **dadurch gekennzeichnet, dass** die durch ein Paar Rippen (138) gebildete Abscherbegrenzungsvorrichtung (101) derart ist, dass eine erste Rippe einen geraden seitlichen Rand (140) aufweist und dass eine zweite Rippe einen seitlichen Rand (142) mit unebenem Profil aufweist.

10. Elektrische Anschlussschnittstelle nach dem vorhergehenden Anspruch, **dadurch gekennzeichnet, dass** der seitliche Rand mit unebenem Profil (142) einen proximalen Abschnitt (146), der sich von der Platine (102) senkrecht zu dieser Platine und der Aussparung (124) direkt benachbart erstreckt, und einen distalen Abschnitt (150) aufweist, der bezüglich des proximalen Abschnitts einen bezüglich der Aussparung eingezogenen Versatz bildet.

11. Elektrische Anschlussschnittstelle nach dem vorhergehenden Anspruch, **dadurch gekennzeichnet, dass** der proximale Abschnitt (146) und der distale Abschnitt (150) durch einen geneigten Zwischenabschnitt (148) getrennt sind, der eine Rampe zum Führen des Anschlussterminals (126) zu der entsprechenden Aussparung (124) hin bildet.

12. Elektrische Anschlussschnittstelle nach Ansprüchen 7 und 10, **dadurch gekennzeichnet, dass** die am Ende der Reihe angeordnete Rippe (138) einzig und allein durch einen der Aussparung direkt benachbarten proximalen Abschnitt (146) gebildet ist.

13. Elektrische Anschlussschnittstelle nach einem der vorhergehenden Ansprüche, **dadurch gekennzeichnet, dass** sie mindestens einen Einrastfinger (116) aufweist, der dazu ausgestaltet ist, mit einer in einer Wand des elektrischen Heizgeräts gebildeten Bohrung (118) zusammenzuwirken, und dass mindestens eine Rippe (138c, 138d) fest mit diesem Einrastfinger (116) verbunden ist.

14. Elektrische Anschlussschnittstelle nach einem der vorhergehenden Ansprüche, **dadurch gekennzeichnet, dass** die Platine (102) ferner einen Stachel (120) aufweist, der am Rand der Abscherbegrenzungsvorrichtung angeordnet ist.

15. Zusatzheizgerät, aufweisend eine Anschlussschnittstelle (100) nach einem der vorhergehenden Ansprüche und einen Rahmen (3), in dem mindestens ein Heizelement (5) sitzt, wobei die Anschlussschnittstelle dazu ausgestaltet ist, für den Anschluss der Vorrichtung an ein Stromnetz des Fahrzeugs und die Versorgung der Heizelemente an einem Ende des Rahmens montiert zu werden.

16. Zusatzheizgerät nach dem vorhergehenden Anspruch, **dadurch gekennzeichnet, dass** der Rahmen (3) Wände aufweist, unter denen sich mindestens eine proximale vertikale Wand (21) befindet, an der die Anschlussschnittstelle (100) befestigt ist.

17. Zusatzheizgerät nach dem vorhergehenden Anspruch, **dadurch gekennzeichnet, dass** sich mindestens eine Rippe (138) von der Platine (102) der Anschlussschnittstelle (100) erstreckt, indem sie senkrecht zu der Platine eine Abmessung aufweist, die kleiner als die Abmessung der proximalen Wand des Rahmens in derselben Richtung ist.

18. Zusatzheizgerät nach dem vorhergehenden Anspruch, **dadurch gekennzeichnet, dass** es eine Vorrichtung zur Begrenzung der Federung der Heizelemente aufweist, die an dem Rahmen befestigt ist und eine oder mehrere Öffnungen aufweist, die jeweils zur Aufnahme eines fest mit dem Rahmen verbundenen Zapfens ausgestaltet sind, wobei dieser Zapfen im Innern der Öffnung plastisch deformiert wird, so dass die Federungsbegrenzungsvorrichtung gegen die Heizelemente gedrückt wird und so dass eine Kraft ausgeübt wird, um sie in ihre Aufnahme in dem Rahmen zu drücken.

## Claims

1. Electrical connection interface (100) for an electric heating device for heating an airflow circulating inside a heating, ventilation and/or air conditioning installation of a motor vehicle, said connection interface having, in a mounting plate (102), at least one notch (124) designed to receive a connection terminal (126) mounted at the end of an electrode of a heating element of the electric heating device, **characterized in that** it has at least one device (101) for limiting the shear of the connection terminal, which device protrudes from the mounting plate (102) in the vicinity of the notch (124), the shear limiting device (101) having at least one pair of ribs (138), which respectively protrude from the mounting plate (102), while being arranged on either side of the corresponding notch (124), the free end of at least one rib (138) having a chamfer (152) for guiding the connection terminal (126) .

2. Electrical connection interface according to Claim 1, **characterized in that** the ribs (138) of a pair of ribs are oriented perpendicularly to the orientation of the corresponding notch (124).

3. Electrical connection interface according to either of Claims 1 and 2, **characterized in that** it has a plurality of notches (124) and a plurality of ribs (138) associated in pairs with each of the notches.

4. Electrical connection interface according to the preceding claim, **characterized in that** all of the ribs (138) extend perpendicularly to the notches (124).

5. Electrical connection interface according to one of the preceding claims, **characterized in that** the ribs (138) are aligned one after another.

6. Electrical connection interface according to one of Claims 3 to 5, **characterized in that** at least two successive ribs (138) are identical.

7. Electrical connection interface according to one of Claims 3 to 6, **characterized in that** a rib (138e, 138f) disposed at the end of the series formed by the plurality of ribs (138) has a smaller size than the corresponding size of the other ribs (138a, 138b, 138c, 138d).

8. Electrical connection interface according to one of Claims 3 to 7, **characterized in that** at least one rib (138) extends from one notch (124) to the adjacent notch.

9. Electrical connection interface according to one of Claims 1 to 8, **characterized in that** the shear limiting device (101) formed by a pair of ribs (138) is such that a first rib has a straight lateral edge (140) and a second rib has a lateral edge (142) with an irregular profile.

10. Electrical connection interface according to the preceding claim, **characterized in that** the lateral edge (142) with an irregular profile has a proximal portion (146) which extends from the mounting plate (102) perpendicularly to this mounting plate and in the direct vicinity of the notch (124), and a distal portion (150) that forms a step with respect to the proximal portion and is set back with respect to the notch.

11. Electrical connection interface according to the preceding claim, **characterized in that** the proximal portion (146) and the distal portion (150) are separated by an inclined intermediate portion (148) forming a ramp for guiding the connection terminal (126) towards the corresponding notch (124).

12. Electrical connection interface according to Claims 7 and 10, **characterized in that** the rib (138) disposed at the end of the series is formed only by a proximal portion (146) in the direct vicinity of the notch.

13. Electrical connection interface according to one of the preceding claims, **characterized in that** it has at least one snap-fastening finger (116) configured to cooperate with a bore (118) formed in a wall of the electric heating device, and **in that** at least one rib (138c, 138d) is secured to this snap-fastening finger (116) .

14. Electrical connection interface according to one of the preceding claims, **characterized in that** the mounting plate (102) also has a stud (120) disposed at the boundary of the shearing limitation device.

15. Additional heating device having a connection interface (100) according to one of the preceding claims and a frame (3) in which the at least one heating element (5) is housed, the connection interface being configured to be mounted at one end of the frame in order to connect the device to an electrical network of the vehicle and the power supply of the heating elements.

16. Additional heating device according to the preceding claim, **characterized in that** the frame (3) has walls including at least one proximal vertical wall (21) on which the connection interface (100) is fixed.

17. Additional heating device according to the preceding claim, **characterized in that** at least one rib (138) extends from the mounting plate (102) of the connection interface (100) by having a dimension perpendicular to the mounting plate that is less than the dimension of the proximal wall of the frame in the same direction.

18. Additional heating device according to the preceding claim, **characterized in that** it has a device for limiting the travel of the heating elements fixed on the frame and having one or more openings configured to each receive a pin secured to the frame, this pin being plastically deformed inside the opening so as to press the travel limiting device against the heating elements and so as to exert a bearing force in order to press them into their housing in the frame.
